# EUROPÄISCHE PATENTSCHRIFT

(11) **EP 3 688 958 B1**
(45) Veröffentlichungstag und Bekanntmachung des Hinweises auf die Patenterteilung: **28.07.2021**
(21) Anmeldenummer: 18808233.3
(22) Anmeldetag: 07.11.2018
(51) Int. Cl.: H04L 29/06, B61L 15/00, H04L 29/08

(54) **SYSTEM UND VERFAHREN ZUM GESCHÜTZTEN ÜBERTRAGEN VON DATEN**
SYSTEM AND METHOD FOR THE PROTECTED TRANSMISSION OF DATA
SYSTÈME ET PROCÉDÉ DE TRANSMISSION SÉCURISÉE DE DONNÉES

(30) Priorität: 15.11.2017 DE 102017220370
(43) Veröffentlichungstag der Anmeldung: 05.08.2020
(73) Patentinhaber: Siemens Mobility GmbH, 81739 München (DE)
(72) Erfinder: LOHNEIS, Georg, 96250 Ebensfeld (DE)
(86) Internationale Anmeldenummer: PCT/EP2018/080430
(87) Internationale Veröffentlichungsnummer: WO 2019/096643

(56) Entgegenhaltungen:
- WO-A1-2017/024078
- DE-A1-102011 076 350
- DE-A1-102014 212 484
- US-A1- 2017 310 674

## Beschreibung

Die Erfindung betrifft ein System zum Senden und Empfangen von Daten, insbesondere für ein Schienenfahrzeug, sowie ein Verfahren zum Übertragen von Daten.

Um einen direkten Zugriff auf eine Leitebene oder Subsysteme von Schienenfahrzeugen, beispielsweise über das Internet durch eine Funkeinheit oder drahtgebundene Verbindungen zum Schienenfahrzeug, zu verhindern, muss es eine Absicherung im Datenverkehr zwischen den Kommunikationsvorrichtungen des Schienenfahrzeugs und den Subsystemen oder der Leitebene des Schienenfahrzeugs geben.

Übliche Mechanismen zum Schutz von Kommunikationsverbindungen sind beispielsweise VPN-Tunnel und die Verwendung von Firewalls.

Aus dem Dokument WO 2017/024078 A1 ist ein beispielhaftes, Firewallbasiertes Schutzverfahren bekannt.

Des Weiteren sind Verfahren zur so genannten Intrusion Detection bzw. Angriffserkennung bekannt, welche zum Schutz von Kommunikationsverbindungen des Schienenfahrzeugs eingesetzt werden können.

Die bisher bekannten softwarebasierten Verfahren schützen Kommunikationsverbindungen gegenüber einem Zugriff Dritter jedoch unzureichend.

Des Weiteren können die softwarebasierten Schutzmechanismen durch Dritte manipuliert werden, wodurch nachteilige Rückwirkungen auf den Betrieb des Schienenfahrzeuges verursacht werde können. Bei einem softwarebasierten Schutz von Kommunikationsverbindungen besteht immer eine Gefahr, dass Änderungen an der Software vorgenommen und die Schutzmechanismen des Schienenfahrzeugs umgangen werden können.

Aufgabe der Erfindung ist es ein System und ein Verfahren zum manipulationssicheren Schützen einer Leitebene eines Schienenfahrzeugs vor Zugriffen Dritter vorzuschlagen.

Gelöst wird die Aufgabe durch die Gegenstände der unabhängigen Patentansprüche. Vorteilhafte Ausgestaltungen der Erfindung sind Gegenstand von jeweils abhängigen Unteransprüchen.

Nach einem Aspekt der Erfindung wird ein System zum Senden und Empfangen von Daten, insbesondere für ein Schienenfahrzeug bereitgestellt. Das System weist mindestens eine fahrzeuginterne Steuerungseinheit zum Verarbeiten und Erzeugen von Daten auf.

Mindestens eine externe Servereinheit des Systems weist eine Kommunikationsvorrichtung zum Herstellen einer Kommunikationsverbindung zu mindestens einen fahrzeuginternen Schnittstelle auf.

Des Weiteren weist das System mindestens eine fahrzeuginterne Schnittstelle zum Senden von der mindestens einen fahrzeuginternen Steuerungseinheit erzeugten Daten und zum Empfangen von der mindestens einen externen Servereinheit versendeten Daten auf.

Erfindungsgemäß sind die mindestens eine fahrzeuginterne Steuerungseinheit und die mindestens eine fahrzeuginterne Schnittstelle über eine elektronische Filtervorrichtung datenleitend miteinander verbunden.

Hierdurch kann die Kommunikationsverbindung zwischen der mindestens einen fahrzeuginternen Schnittstelle und der mindesten einen Steuerungseinheit durch einen Hardwarefilter entkoppelt werden. Der Filter bzw. die elektronische Filtervorrichtung ist auf Basis einer Hardware ausgestaltet und kann den Datenverkehr zwischen der fahrzeuginternen Schnittstelle und dem mindestens einem fahrzeuginternen Steuerungssystem prüfen und schützen. Es kann somit sichergestellt werden, dass nur zugelassene Telegramme oder Daten zu dem mindestens einem Steuerungssystem weitergleitet werden.

Die mindestens eine fahrzeuginterne Schnittstelle, die mindestens eine fahrzeuginterne Steuerungsvorrichtung und die elektrische Filtervorrichtung können in einem Schienenfahrzeug als Teil seiner elektrischen Komponenten angeordnet sein. Hierbei kann mindestens ein Schienenfahrzeug Bestandteil des erfindungsgemäßen Systems sein.

Durch diese Lösung kann eine technisch einfache Absicherung der Steuerungssysteme eines Schienenfahrzeugs gewährleistet werden. Insbesondere kann durch die elektronische Filtervorrichtung ein manipulationssicherer Schutz vor unerlaubtem Zugriff auf Steuerungssysteme des Schienenfahrzeugs realisiert werden.

Gemäß einem Ausführungsbeispiel des Systems sind zwischen der mindestens einen externen Servereinheit und der mindestens einen fahrzeuginternen Steuerungseinheit übertragenen Daten durch die elektronische Filtervorrichtung überprüfbar. Vorzugsweise ist die elektronische Filtervorrichtung durch diskrete elektronische Bauelemente, wahlweise in Kombination mit Integrierten Schaltkreisen, aufgebaute Vorrichtung mit mindestens einer Funktion zum Prüfen eines Datenstroms.

Der Datenstrom oder die Daten können gebündelt in Form von Datenpaketen oder in Form von Datentelegrammen ausgeprägt sein. Durch die mindestens eine Filterfunktion kann sichergestellt werden, dass nur Daten bzw. Datentelegramme über derartige physikalische Schnittstellen, wie beispielsweise Ethernet, RS232 und dergleichen, gesendet werden, welche eine betriebliche Funktionalität der mindestens einen fahrzeuginternen Steuerungseinheit nicht beeinflussen.

Nach einem weiteren Ausführungsbeispiel des Systems sind zwischen der mindestens einen externen Servereinheit und der mindestens einen fahrzeuginternen Steuerungseinheit übertragenen Daten durch die elektronische Filtervorrichtung auf eine Gültigkeit und/oder eine Zulässigkeit der Daten überprüfbar. Vorzugsweise können die Daten in Form von Protokollen oder Datenpaketen übertragen werden. Es kann zum Prüfen der Gültigkeit und/oder der Zulässigkeit der übertragenen Datenpakete beispielsweise eine Syntax und/oder die Semantik der Protokolle überprüft werden. Abhängig von einem Ergebnis der Prüfung können die Daten anschließend ungehindert weitergeleitet oder blockiert werden.

Vorzugsweise kann die elektronische Filtervorrichtung bidirektional funktionieren und die Daten prüfen. Hierdurch können auch von der mindestens einen fahrzeuginternen Steuerungseinheit erzeugten Rückmeldungen auf Anfragen einer externen Servereinheit sicher übertragen werden.

Die von der elektronischen Filtervorrichtung blockierten Daten oder Datenpakete können hierbei an die vorherige Komponente mit einer Fehlermeldung zurückgesendet werden.

Gemäß einem weiteren Ausführungsbeispiel des Systems ist die mindestens eine fahrzeuginterne Schnittstelle eine Kommunikationsvorrichtung zum Herstellen einer drahtlosen oder einer drahtgebundenen Kommunikationsverbindung zu der mindestens einen externen Servereinheit. Die mindestens eine Schnittstelle kann beispielsweise eine Kommunikationsvorrichtung zum Herstellen einer drahtlosen Kommunikationsverbindung sein.

Die drahtlose Kommunikationsverbindung kann beispielsweise auf einem WLAN, UMTS, GSM, GPRS, LTE oder dergleichen Übertragungsstandard basieren.

Alternativ oder zusätzlich kann die mindestens eine fahrzeuginterne Schnittstelle ein drahtgebundenes Interface zum Durchführen von Servicedienstleistungen, wie beispielsweise Wartungsarbeiten, Diagnosearbeiten und dergleichen, sein. Diese Funktionen können durch die elektronische Filtervorrichtung ebenfalls abgesichert bzw. geprüft werden. Dabei ist der Hardwarefilter bzw. die elektronische Filtervorrichtung datenleitend zwischen einer als Servicezugang ausgestalteten Schnittstelle und mindestens einer fahrzeuginternen Steuerungseinheit angeordnet.

Nach einem weiteren Ausführungsbeispiel des Systems ist die mindestens eine externe Servereinheit eine fahrzeugexterne Leitstelle oder ein fahrzeugexternes Steuergerät. Die mindestens eine externe Servereinheit kann somit ein Rechnersystem einer Leitstelle oder eines Bahnhofs sein, welches datenleitend mit einem Schienenfahrzeug über eine drahtlose Kommunikationsverbindung kommunizieren kann. Hierfür weist das Rechensystem über Kommunikationsvorrichtungen zum Ausführen einer drahtlosen Datenübertragung auf.

Alternativ oder zusätzlich kann die mindestens eine externe Servereinheit ein Steuergerät oder ein tragbarer Rechner sein, welcher drahtlos oder drahtgebunden mit der mindestens einen fahrzeuginternen Schnittstelle koppelbar ist. Hierdurch können von einem Wartungspersonal Wartungs- und Diagnosearbeiten an dem Schienenfahrzeug vorgenommen werden, wobei derartige Schnittstellen durch die elektronische Filtervorrichtung ebenfalls geschützt sind. Somit können auch die Serviceschnittstellen bei einem unerlaubten Zugriff durch die elektronische Filtervorrichtung gesichert werden.

Gemäß einem weiteren Ausführungsbeispiel des Systems ist die elektronische Filtervorrichtung über einen Schalter deaktivierbar oder aktivierbar. Um einen uneingeschränkten Datenverkehr, beispielsweise zwischen einem Funksystem und einer Steuerungseinheit, gewährleisten zu können, kann über einen Hardwareschalter die elektronische Filtervorrichtung außer Funktion gesetzt werden. Dies kann zum Beispiel notwendig sein, um während einer Inbetriebnahme der Steuerungseinheit auf die Steuerungseinheit zugreifen zu können.

Nach einem weiteren Ausführungsbeispiel des Systems ist die elektronische Filtervorrichtung durch die mindestens eine fahrzeuginterne Steuerungseinheit aktivierbar oder deaktivierbar. Hierdurch kann die elektronische Filtervorrichtung durch mindestens eine fahrzeuginterne Steuerungseinheit steuerbar sein. Insbesondere kann der Schalter zum Aktivieren oder Deaktivieren der elektronischen Filtervorrichtung direkt durch die mindestens eine fahrzeuginterne Steuerungseinheit betätigbar sein.

Alternativ oder zusätzlich kann die mindestens eine fahrzeuginterne Steuerungseinheit direkt mit der elektronischen Filtervorrichtung verbunden sein, sodass die Funktionsfähigkeit der elektronischen Filtervorrichtung unmittelbar von der mindestens einen fahrzeuginternen Steuerungseinheit beeinflusst werden kann.

Die mindestens eine Steuerungseinheit kann somit direkt oder indirekt die elektronischen Filtervorrichtung einschalten oder ausschalten.

Gemäß einem weiteren Ausführungsbeispiel des Systems ist die elektronische Filtervorrichtung durch die mindestens eine fahrzeuginterne Steuerungseinheit abhängig von einem Betriebsmodus und/oder von einer Geschwindigkeit des Schienenfahrzeugs aktivierbar. Damit die Filterfunktion der elektronischen Filtervorrichtung nicht versehentlich während des Betriebs des Schienenfahrzeugs deaktiviert bleibt, kann der Schalter mit der Leittechnik bzw. mindestens einer fahrzeuginterner Steuerungseinheit verbunden sein. Sind bestimmte Bedingungen, wie beispielsweise Wartungsmodus des Schienenfahrzeugs ist deaktiviert oder das Schienenfahrzeug weist eine höhere Geschwindigkeit als z.B. 5 km/h auf, so wird die Filterfunktion der elektronischen Filtervorrichtung zwangsweise wieder aktiviert. Hierdurch kann die ordnungsgemäße Funktion der elektronischen Filtervorrichtung gewährleistet werden.

Nach einem weiteren Ausführungsbeispiel des Systems ist die elektronische Filtervorrichtung durch die mindestens eine fahrzeuginterne Steuerungseinheit automatisch aktivierbar. Durch die automatische Aktivierung der elektronischen Filtervorrichtung kann der Hardwarefilter trotz einem Fehler von Wartungspersonal bzw. einem Vergessen der manuellen Aktivierung des Hardwarefilters zwangsweise erneut durch die mindestens eine Steuerungseinheit eingeschaltet werden.

Gemäß einem weiteren Ausführungsbeispiel des Systems ist die elektronische Filtervorrichtung unmittelbar oder über ein Netzwerk mit der mindestens einen fahrzeuginternen Steuerungseinheit datenleitend verbunden. Die mindestens eine fahrzeuginterne Steuerungseinheit kann direkt mit dem Hardwarefilter bzw. der elektronischen Filtervorrichtung verbunden sein. Insbesondere kann die elektronische Filtervorrichtung in die mindestens eine fahrzeuginterne Steuerungseinheit integriert sein oder über ein Datenkabel mit der mindestens einen Steuerungseinheit verbunden sein. Alternativ oder zusätzlich kann die elektronische Filtervorrichtung über ein Netzwerk mit der mindestens einen fahrzeuginternen Steuerungseinheit gekoppelt sein. Das Netzwerk kann vorzugsweise ein Ethernet-Netzwerk, Fahrzeugnetzwerk oder ein Fahrzeugbus des Schienenfahrzeugs sein. Es kann somit durch die elektronische Filtervorrichtung das gesamte Netzwerk bzw. eine Kommunikation zu mehreren Komponenten gesichert werden.

Die Filtereinheit bzw. Filtervorrichtung kann vorzugsweise als eine eigene Hardware oder als ein Steuergerät ausgestaltet sein oder in einer bestehenden Hardware, wie beispielsweise einer Steuerungseinheit, integriert sein.

Nach einem weiteren Ausführungsbeispiel des Systems ist die mindestens eine fahrzeuginterne Schnittstelle eine drahtlose Kommunikationsvorrichtung oder ein Service-Interface. Hierdurch kann die mindestens eine fahrzeuginterne Steuerungseinheit flexibel ausgestaltet sein und eine Vielzahl an unterschiedlichen Kopplungsmöglichkeiten bieten.

Gemäß einem weiteren Aspekt der Erfindung wird ein Verfahren zum Übertragen von Daten mit einem erfindungsgemäßen System bereitgestellt.

In einem Schritt wird eine drahtlose oder eine drahtgebundene Kommunikationsverbindung zwischen mindestens einen fahrzeuginternen Schnittstelle und mindestens einen externen Servereinheit hergestellt.

Über die hergestellte Kommunikationsverbindung können unidirektional oder bidirektional Daten übertragen werden. Die Daten können in Form von Paketen oder Telegrammen übertragen werden. Die an die mindestens eine fahrzeuginterne Schnittstelle übertragenen Daten werden dabei durch eine elektronische Filtervorrichtung überprüft.

Es werden die von der elektronischen Filtervorrichtung überprüften zulässigen und/oder gültigen Daten von der elektronischen Filtervorrichtung an mindestens eine fahrzeuginterne Steuerungseinheit unverändert weitergeleitet.

Die von der elektronischen Filtervorrichtung überprüften unzulässigen oder ungültigen Daten werden von der elektronischen Filtervorrichtung blockiert oder an die mindestens eine fahrzeuginterne Schnittstelle zurückgesendet.

Bei diesem Verfahren kann sichergestellt werden, dass nur derartige Daten bzw. Datenpakete zu mindestens einer Steuerungseinheit eines Schienenfahrzeugs oder eines Fahrzeugs übertragen werden können, die den Betrieb des Fahrzeugs nicht beeinflussen. Die einen Betrieb des Fahrzeugs beeinflussenden Daten können von der elektronischen Filtervorrichtung im Vorfeld gefiltert bzw. blockiert werden.

Des Weiteren können entsprechende Steuergeräte mit einer erfindungsgemäßen Filterfunktion leichter zugelassen werden, da die notwendigen Nachweise technisch einfach erbracht werden können. Dies kann durch ein Prüfen der Filterfunktion und der fehlenden nachteiligen Beeinflussung eines Betriebs des Fahrzeugs durch die Filterfunktion realisiert werden.

Durch das erfindungsgemäße Verfahren kann eine technisch einfache Absicherung der Steuerungssysteme eines Fahrzeugs gewährleistet werden. Insbesondere kann durch die elektronische Filtervorrichtung ein manipulationssicherer Schutz vor unerlaubtem Zugriff auf die Steuerungssysteme des Schienenfahrzeugs realisiert werden.

Nach einem Ausführungsbeispiel des Verfahrens wird die elektronische Filtervorrichtung über einen Schalter oder die mindestens eine fahrzeuginterne Steuerungseinheit aktiviert oder deaktiviert. Hierdurch kann die elektronische Filtervorrichtung über einen mechanischen oder elektronischen Schalter steuerbar sein. Insbesondere kann der Hardwarefilter durch den Schalter überbrückbar sein. Alternativ oder zusätzlich kann die elektronische Filtervorrichtung durch mindestens eine fahrzeuginterne Steuerungseinheit aktivierbar oder deaktivierbar sein. Damit kann die Filterfunktion außer Kraft gesetzt werden, wodurch ein uneingeschränkter Zugriff auf alle Steuerungsgeräte im Fahrzeug ermöglicht wird.

Gemäß einem weiteren Ausführungsbeispiel des Verfahrens ist die elektronische Filtervorrichtung in einem Schienenfahrzeug angeordnet und wird in einem deaktivierten Zustand zeitabhängig, geschwindigkeitsabhängig und/oder abhängig von einem Betriebsmodus des Schienenfahrzeugs automatisch aktiviert. Es kann somit eine zwangsweise Einschaltung der elektronischen Filtervorrichtung realisiert werden, welche ein unbeabsichtigtes Ausschalten der Filterfunktion korrigiert.

Die oben beschriebenen Eigenschaften, Merkmale und Vorteile dieser Erfindung sowie die Art und Weise, wie diese erreicht werden, werden klarer und deutlicher verständlich durch die Erläuterung der folgenden stark vereinfachten schematischen Darstellungen bevorzugter Ausführungsbeispiele. Hierbei zeigen
- FIG 1: eine schematische Darstellung eines Systems gemäß einem ersten erfindungsgemäßen Ausführungsbeispiel und
- FIG 2: eine schematische Darstellung eines Systems gemäß einem zweiten erfindungsgemäßen Ausführungsbeispiel.

In den Figuren weisen dieselben konstruktiven Elemente jeweils dieselben Bezugsziffern auf.

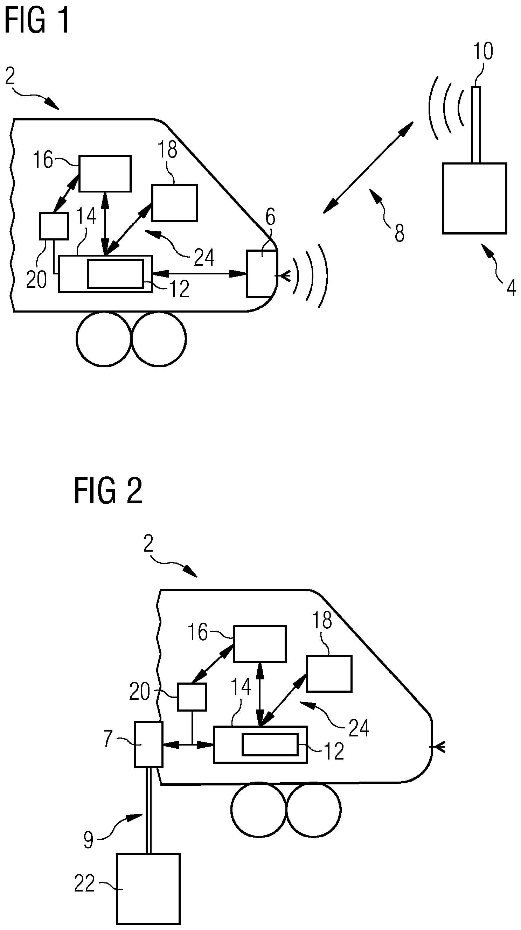

Die FIG 1 zeigt eine schematische Darstellung eines Systems 1 gemäß einem ersten erfindungsgemäßen Ausführungsbeispiel. Das System 1 weist hierbei ein Schienenfahrzeug 2 und eine externe Servereinheit 4 auf. Die externe Servereinheit 4 ist beispielsweise eine Leitzentrale oder Betriebszentrale zum Überwachen und Steuern von einem Schienenverkehr.

Das Schienenfahrzeug 2 weist eine Kommunikationsvorrichtung 6 auf, welche eine drahtlose Kommunikationsverbindung 8 mit einer Kommunikationsvorrichtung 10 der externen Servereinheit 4 zum bidirektionalen Übertragen von Daten bzw. Datenpaketen erstellen kann. Die Kommunikationsverbindung 8 ist hier als eine Mobilfunkverbindung, beispielsweise über ein UMTS oder LTE Netz, ausgeprägt.

Die von der externen Servereinheit 4 gesendeten Daten können von der Kommunikationsvorrichtung 6 des Schienenfahrzeugs 2 empfangen werden. Die Kommunikationsvorrichtung 6 des Schienenfahrzeugs 2 ist gemäß dem Ausführungsbeispiel eine fahrzeuginterne Schnittstelle 6.

Die Daten werden anschließend von der Kommunikationsvorrichtung 6 an eine elektronische Filtervorrichtung 12 weitergeleitet. Die elektronische Filtervorrichtung ist in einem separaten Steuergerät 14 des Schienenfahrzeugs 2 integriert ausgestaltet.

Die zulässige Daten werden von der Filtervorrichtung 12 weitergeleitet an mindestens eine fahrzeuginterne Steuerungseinheit 16, 18.

Hierbei weist das Schienenfahrzeug 2 beispielhaft zwei fahrzeuginterne Steuerungseinheiten 16, 18 auf. Die Steuerungseinheiten 16, 18 können die übertragenen Daten empfangen und verarbeiten. Die fahrzeuginternen Steuerungseinheiten 16, 18 sind als zwei unabhängige Steuerungsgeräte zum Verarbeiten oder zum Berechnen von Daten ausgeprägt. Die beiden Steuerungseinheiten 16, 18 sind über ein Netzwerk 24 mit der Filtervorrichtung 12 datenleitend gekoppelt.

Zum Deaktivieren und Aktivieren der Filtervorrichtung 12 ist in dem Schienenfahrzeug 2 ein Schalter 20 angeordnet. Hierdurch kann das Steuergerät 14 überbrückt werden. Ein fahrzeuginternes Steuergerät 16 ist ebenfalls mit dem Schalter 20 gekoppelt und kann diesen automatisiert betätigen. Hierdurch kann die elektronische Filtervorrichtung 12 automatisiert eingeschaltet werden, sofern das Schienenfahrzeug 2 mit einer definierten Geschwindigkeit bewegt wird.

Die FIG 2 zeigt eine schematische Darstellung eines Systems 1 gemäß einem zweiten erfindungsgemäßen Ausführungsbeispiel. Im Unterschied zum ersten Ausführungsbeispiel, weist das Schienenfahrzeug 2 eine zweite fahrzeuginterne Schnitt-stelle 7 auf, welche als ein Serviceinterface 7 ausgestaltet ist.

Zwecks Wartungsarbeiten kann beispielsweise ein Diagnosegerät 22 über eine drahtgebundene Kommunikationsverbindung 9 mit dem Serviceinterface 7 gekoppelt werden. Das Diagnosegerät 22 kann beispielsweise ein Tablet oder ein Notebook sein, welches über ein Kabel 9 mit der fahrzeuginternen Schnittstelle 7 verbindbar ist.

Hierdurch kann ein direkter Zugriff auf die Steuerungseinheiten 16, 18 realisiert werden, wobei die über die Kommunikationsverbindung 9 übertragenen Daten durch die elektronische Filtervorrichtung 12 geprüft werden.

## Patentansprüche

1. System (1) zum Senden und Empfangen von Daten für ein Schienenfahrzeug (2), aufweisend
- mindestens eine fahrzeuginterne Steuerungseinheit (16, 18) zum Verarbeiten und Erzeugen von Daten,
- mindestens eine externe Servereinheit (4, 22) mit einer Kommunikationsvorrichtung (10) zum Herstellen einer Kommunikationsverbindung (8, 9) zu mindestens einer fahrzeuginternen Schnittstelle (6, 7),
- mindestens eine fahrzeuginterne Schnittstelle (6, 7) zum Senden von der mindestens einen fahrzeuginternen Steuerungseinheit (16, 18) erzeugten Daten und zum Empfangen von der mindestens einen externen Servereinheit (4, 22) versendeten Daten,
- bei dem die mindestens eine fahrzeuginterne Steuerungseinheit (16, 18) und die mindestens eine fahrzeuginterne Schnittstelle (6, 7) über eine elektronische Filtervorrichtung (12) datenleitend miteinander verbunden sind,
- bei dem die elektronische Filtervorrichtung (12) auf Basis einer Hardware ausgestaltet ist, die die Kommunikationsverbindung zwischen der mindestens einen fahrzeuginternen Schnittstelle und der mindesten einen Steuerungseinheit als Hardwarefilter entkoppelt, so dass nur zugelassene Daten zu der mindestens einen Steuerungseinheit weitergleitet werden, und
- bei dem die elektronische Filtervorrichtung (12) durch die mindestens eine fahrzeuginterne Steuerungseinheit (16) aktivierbar oder deaktivierbar ist.

2. System nach Anspruch 1, bei dem zwischen der mindestens einen externen Servereinheit (4, 22) und der mindestens einen fahrzeuginternen Steuerungseinheit (16, 18) übertragenen Daten durch die elektronische Filtervorrichtung (12) überprüfbar sind.

3. System nach Anspruch 2, bei dem zwischen der mindestens einen externen Servereinheit (4, 22) und der mindestens einen fahrzeuginternen Steuerungseinheit (16, 18) übertragenen Daten durch die elektronische Filtervorrichtung (12) auf eine Gültigkeit und/oder eine Zulässigkeit der Daten überprüfbar sind.

4. System nach einem der Ansprüche 1 bis 3, bei dem die mindestens eine fahrzeuginterne Schnittstelle (6, 7) eine Kommunikationsvorrichtung zum Herstellen einer drahtlosen oder einer drahtgebundenen Kommunikationsverbindung (8, 9) zu der mindestens einen externen Servereinheit (4, 22) ist.

5. System nach einem der Ansprüche 1 bis 4, bei dem die mindestens eine externe Servereinheit (4, 22) eine fahrzeugexterne Leitstelle (4) oder ein fahrzeugexternes Steuergerät (22) ist.

6. System nach Anspruch 1, bei dem die elektronische Filtervorrichtung (12) durch die mindestens eine fahrzeuginterne Steuerungseinheit (16) abhängig von einem Betriebsmodus und/oder von einer Geschwindigkeit des Schienenfahrzeugs (2) aktivierbar ist.

7. System nach Anspruch 1 oder 6, bei dem die elektronische Filtervorrichtung (12) durch die mindestens eine fahrzeuginterne Steuerungseinheit (16) automatisch aktivierbar ist.

8. System nach einem der Ansprüche 1 bis 7, bei dem die elektronische Filtervorrichtung (12) unmittelbar oder über ein Netzwerk (24) mit der mindestens einen fahrzeuginternen Steuerungseinheit (16, 18) datenleitend verbunden ist.

9. System nach einem der Ansprüche 1 bis 8, bei dem die mindestens eine fahrzeuginterne Schnittstelle (6, 7) eine drahtlose Kommunikationsvorrichtung (6) oder ein Service-Interface (7) ist.

10. Verfahren zum Übertragen von Daten,
- bei dem die Daten mit einem System (1) nach einem der vorhergehenden Ansprüche übertragen werden,
- bei dem eine drahtlose oder eine drahtgebundene Kommunikationsverbindung (8, 9) zwischen mindestens einer fahrzeuginternen Schnittstelle (6, 7) und mindestens einer externen Servereinheit (4, 22) hergestellt wird,
- bei dem an die mindestens eine fahrzeuginterne Schnittstelle (6, 7) übertragenen Daten durch eine elektronische Filtervorrichtung (12) überprüft werden,
- bei dem die von der elektronischen Filtervorrichtung (12) überprüften zulässigen und/oder gültigen Daten an mindestens eine fahrzeuginterne Steuerungseinheit (16, 18) unverändert weitergeleitet werden,
- bei dem die von der elektronischen Filtervorrichtung (12) überprüften unzulässigen oder ungültigen Daten blockiert oder an die mindestens eine fahrzeuginterne Schnittstelle (6, 7) zurückgesendet werden,
- wobei die elektronische Filtervorrichtung (12) über einen Schalter (20) oder die mindestens eine fahrzeuginterne Steuerungseinheit (16, 18) aktiviert oder deaktiviert wird.

11. Verfahren nach Anspruch 10, bei dem die elektronische Filtervorrichtung (12) in einem Schienenfahrzeug (2) angeordnet ist und in einem deaktivierten Zustand zeitabhängig, geschwindigkeitsabhängig und/oder abhängig von einem Betriebsmodus des Schienenfahrzeugs (2) automatisch aktiviert wird.

## Claims

1. System (1) for transmitting and receiving data for a rail vehicle (2), having
- at least one in-vehicle control unit (16, 18) for processing and generating data,
- at least one external server unit (4, 22) with a communication device (10) for establishing a communication connection (8, 9) to at least one in-vehicle interface (6, 7),
- at least one in-vehicle interface (6, 7) for transmitting data generated by the at least one in-vehicle control unit (16, 18) and for receiving data sent by the at least one external server unit (4, 22)
- in which the at least one in-vehicle control unit (16, 18) and the at least one in-vehicle interface (6, 7) are interconnected, having a data transmission capability, via an electronic filter device (12),
- in which the electronic filter device (12) is designed on the basis of hardware which decouples the communication connection between the at least one in-vehicle interface and the at least one control unit as a hardware filter, with the result that only permitted data are forwarded to the at least one control unit, and
- in which the electronic filter device (12) is deactivatable or activatable by the at least one in-vehicle control unit (16).

2. System according to Claim 1, in which data transmitted between the at least one external server unit (4, 22) and the at least one in-vehicle control unit (16, 18) are verifiable by means of the electronic filter device (12).

3. System according to Claim 2, in which data transmitted between the at least one external server unit (4, 22) and the at least one in-vehicle control unit (16, 18) are verifiable in terms of a validity and/or permissibility of the data by means of the electronic filter device (12).

4. System according to one of Claims 1 to 3, in which the at least one in-vehicle interface (6, 7) is a communication device for establishing a wireless or wired communication connection (8, 9) to the at least one external server unit (4, 22).

5. System according to one of Claims 1 to 4, in which the at least one external server unit (4, 22) is a control centre (4) outside the vehicle or a control device (22) outside the vehicle.

6. System according to Claim 1, in which the electronic filter device (12) is activatable by the at least one in-vehicle control unit (16) depending on an operating mode and/or a speed of the rail vehicle (2).

7. System according to Claim 1 or 6, in which the electronic filter device (12) is automatically activatable by the at least one in-vehicle control unit (16).

8. System according to one of Claims 1 to 7, in which the electronic filter device (12) is connected, having a data transmission capability, directly or via a network (24) to the at least one in-vehicle control unit (16, 18).

9. System according to one of Claims 1 to 8, in which the at least one in-vehicle interface (6, 7) is a wireless communication device (6) or a service interface (7).

10. Method for transmitting data,
- in which the data are transmitted using a system (1) according to one of the preceding claims,
- in which a wireless or wired communication connection (8, 9) is established between at least one in-vehicle interface (6, 7) and at least one external server unit (4, 22),
- in which data transmitted to the at least one in-vehicle interface (6, 7) are verified by an electronic filter device (12),
- in which the permissible and/or valid data verified by the electronic filter device (12) are forwarded unchanged to at least one in-vehicle control unit (16, 18),
- in which the impermissible or invalid data verified by the electronic filter device (12) are blocked or are transmitted back to the at least one in-vehicle interface (6, 7),
- wherein the electronic filter device (12) is activated or deactivated via a switch (20) or the at least one in-vehicle control unit (16).

11. Method according to Claim 10, in which the electronic filter device (12) is disposed in a rail vehicle (2) and is automatically activated in a deactivated state depending on time, speed and/or an operating mode of the rail vehicle (2).

## Revendications

1. Système (1) pour l'émission et la réception de données pour un véhicule ferroviaire (2), comprenant
- au moins une unité de commande interne au véhicule (16, 18) pour le traitement et la génération de données,
- au moins une unité de serveur externe (4, 22) avec un dispositif de communication (10) pour l'établissement d'une liaison de communication (8, 9) avec au moins une interface interne au véhicule (6, 7),
- au moins une interface interne au véhicule (6, 7) pour l'émission des données générées par l'au moins une unité de commande interne au véhicule (16, 18) et pour la réception des données émises par l'au moins une unité de serveur externe (4, 22),
- dans lequel l'au moins une unité de commande interne au véhicule (16, 18) et l'au moins une interface interne au véhicule (6, 7) sont reliées entre elles avec liaison de données par l'intermédiaire d'un dispositif de filtrage électronique (12),
- dans lequel le dispositif de filtrage électronique (12) est conçu sur la base d'un hardware qui découple, en tant que filtre matériel, la liaison de communication entre l'au moins une interface interne au véhicule et l'au moins une unité de commande interne au véhicule, de façon à ce que seules les données autorisées soient transmises à l'au moins une unité de commande et
- dans lequel le dispositif de filtrage électronique (12) peut être activé ou désactivé par l'au moins une unité de commande interne au véhicule (16).

2. Système selon la revendication 1, dans lequel les données transmises entre l'au moins une unité de serveur externe (4, 22) et l'au moins une unité de commande interne au véhicule (16, 18) peuvent être vérifiées par le dispositif de filtrage électronique (12).

3. Système selon la revendication 2, dans lequel une validité et/ou une admissibilité des données transmises entre l'au moins une unité de serveur externe (4, 22) et l'au moins une unité de commande interne au véhicule (16, 18) peuvent être vérifiées par le dispositif de filtrage électronique (12).

4. Système selon l'une des revendications 1 à 3, dans lequel l'au moins une interface interne au véhicule (6, 7) est un dispositif de communication pour l'établissement d'une liaison de communication (8, 9) sans fil ou filaire avec l'au moins une unité de serveur externe (4, 22).

5. Système selon l'une des revendications 1 à 4, dans lequel l'au moins une unité de serveur externe (4, 22) est un poste de commande externe au véhicule (4) ou un appareil de commande externe au véhicule (22).

6. Système selon la revendication 1, dans lequel le dispositif de filtrage électronique (12) peut être activé par l'au moins une unité de commande interne au véhicule (16) en fonction d'un mode de fonctionnement et/ou d'une vitesse du véhicule ferroviaire (2).

7. Système selon la revendication 1 ou 6, dans lequel le dispositif de filtrage électronique (12) peut être activé automatiquement par l'au moins une unité de commande interne au véhicule (16).

8. Système selon l'une des revendications 1 à 7, dans lequel le dispositif de filtrage électronique (12) est relié, avec une transmission de données, directement ou par l'intermédiaire d'un réseau (24), avec l'au moins une unité de commande interne au véhicule (16, 18).

9. Système selon l'une des revendications 1 à 8, dans lequel l'au moins une interface interne au véhicule (6, 7) est un dispositif de communication sans fil (6) ou une interface de service (7).

10. Procédé de transmission de données,
- dans lequel les données sont transmises avec un système (1) selon l'une des revendications précédentes,
- dans lequel une liaison de communication sans fil ou filaire (8, 9) est établie entre au moins une interface interne au véhicule (6, 7) et au moins une unité de serveur externe (4, 22),
- dans lequel les données transmises à l'au moins une interface interne au véhicule (6, 7) sont vérifiées par un dispositif de filtrage électronique (12),
- dans lequel les données admissibles et/ou valides vérifiées par le dispositif de filtrage électronique (12) sont transmises sans modification à au moins une unité de commande interne au véhicule (16, 18),
- dans lequel les données inadmissibles ou invalides vérifiées par le dispositif de filtrage électronique (12) sont bloquées ou renvoyées à l'au moins une interface interne au véhicule (6, 7),
- dans lequel le dispositif de filtrage électronique (12) est activé ou désactivé par l'intermédiaire d'un commutateur (20) ou de l'au moins une unité de commande interne au véhicule (16, 18).

11. Procédé selon la revendication 10, dans lequel le dispositif de filtrage électronique (12) est disposé dans un véhicule ferroviaire (2) dans un état désactivé et est activé automatiquement en fonction du temps, en fonction de la vitesse et/ou en fonction d'un mode de fonctionnement du véhicule ferroviaire (2).
